# EUROPÄISCHE PATENTANMELDUNG

(11) **EP 3 885 818 A1**
(43) Veröffentlichungstag der Anmeldung: **29.09.2021**
(21) Anmeldenummer: 20165623.8
(22) Anmeldetag: 25.03.2020
(51) Int. Cl.: G02B 27/01, G06F 3/01, G06T 19/00, G01N 21/31

(54) **VORRICHTUNG UND VERFAHREN ZUR SPEKTROSKOPISCHEN OBERFLÄCHENANALYSE**

(71) Anmelder: Siemens Aktiengesellschaft, 80333 München (DE)
(72) Erfinder: Denneler, Stefan, 81371 München (DE); Felkel, Diana, 13158 Berlin (DE); Forster, Frank, 81739 München (DE); Gigler, Alexander Michael, 86836 Untermeitingen (DE); Mais, Stephan, 14656 Brieselang (DE); Paust, Tobias, 89340 Leipheim (DE)

(57) **Zusammenfassung**

Die Erfindung gibt eine Vorrichtung zur spektroskopischen Oberflächenanalyse eines Körpers (4) an. Die Vorrichtung weist auf:
- eine AR-Brille (1),
- eine an der AR-Brille (1) angeordnete spektroskopische Detektionseinheit (2),
- eine an der AR-Brille (1) angeordnete Beleuchtungseinheit (3),
- eine an der AR-Brille (1) angeordnete Posenerkennungseinheit (7) und
- eine Rechen- und Auswerteinheit (6), die eingerichtet ist, ein durch die spektroskopische Detektionseinheit (2) ermitteltes Kontrastbild eines betrachteten und mit der Beleuchtungseinheit (3) beleuchteten Oberflächenbereichs (4.1) des Körpers (4) mit dem durch die AR-Brille (1) betrachteten Oberflächenbereichs (4.1) des Körpers (1) mittels der Messdaten der Posenerkennungseinheit (7) zu deckungsgenau überlagern.

Ein zugehöriges Verfahren zur spektroskopischen Oberflächenanalyse des Körpers (4) wird ebenfalls angegeben.

## Beschreibung

### GEBIET DER ERFINDUNG

Die Erfindung betrifft eine Vorrichtung zur spektroskopischen Oberflächenanalyse eines Körpers, beispielsweise eines Werkstücks, mit Hilfe einer Augmented Reality Brille (= AR-Brille). Die Erfindung betrifft auch ein Verfahren zur spektroskopischen Oberflächenanalyse des Körpers mittels einer AR-Brille.

### HINTERGRUND DER ERFINDUNG

In den Beschichtungsprozessen einer Werkstückveredelung oder im Neu-Aufbau bzw. Refurbishment (= Aufarbeitung) von Bauteilen ist die Haftung der aufzubringenden Schicht essenziell für die Langzeiteigenschaften des Schichtsystems. Hierfür ist ein sauberer Grundwerkstoff die Voraussetzung.

Zur Entschichtung und/oder Neu-Beschichtung fallen dabei mehrere Prozessschritte an, bei denen jeder für sich (Prozess-)Kosten hervorruft. Wenn einer der Prozessschritte dabei fehlerhaft ist oder der zu beschichtende Werkstoff Mängel aufweist oder verunreinigt ist, kommt es zu Qualitätseinbußen am bearbeiteten Werkstück. Dies führt dazu, dass die komplette Kette an Prozessschritten bis zu diesem Punkt verworfen werden muss. Dies bedeutet, dass Kosten von Verbrauchsmaterial, Personal, Zeit und eine erneute Ent-/ und Beschichtung anfallen. In einem schlimmeren Fall ist bei einem fehlerhaften Prozessschritt in der Kette die gesamte Charge an Werkstücken betroffen. Ferner kann ein Verwurf des Werkstücks auf Grund der fehlerhaften Bearbeitung zwingend werden.

Typische Schritte der Beschichtung können dabei sein:
- Lackierungen / Färben (Spritz/ Tauch/Walzen),
- Galvanisierung (Chromatieren, Verzinken, Phosphatieren, Nickel, etc.),
- Folieren und
- Pulverbeschichtung / Schweißen / Löten.

Typische Schritte bei der Entschichtung sind:
- Ätzen,
- Strahlen (Sand, Wasser, Laser) und
- Schleifen / Polieren.

Typische Beispiele für Werkstücke bzw. Bauteile sind:
- Karosserien von Autos/Bussen/Zügen in Lackierstraßen,
- Turbinenschaufeln, die zur Wiederaufbereitung bearbeitet werden,
- Zähne, die auf Karies untersucht werden sollen,
- metallische Gehäuse in Maschinen und Geräten,
- metallische Einkaufswägen, welche mehrere Beschichtungsschritte benötigen, um nicht zu rosten, sowie
- Operationsregionen, bei denen zwischen gutem und bösartigem Gewebe unterschieden werden kann.

Zu den Prozessschritten werden außerdem noch Reinigungsschritte und Maßnahmen hinzugezählt, die Verunreinigungen oder Fehler aus einem vorherigen Schritt und Defekte im Bauteil, z.B. Risse, zum Vorschein bringen sollen. Dazu gehören unter anderem Wärmebehandlungen (Anlassen des Werkstücks im Ofen, Anoxidieren), Behandlungen mit Kontrastmitteln (fluoreszente Marker) zur Sichtbarmachung von Oberflächendefekten, manuelles Abtasten auf Ablagerungen und Sichtprüfung.

Um einen fehlerhaften Prozessschritt oder Werkstoff zu erkennen, helfen vorgenannte Maßnahmen. Diese sind selten wirtschaftlich durchführbar und führen damit zu erhöhten Kosten. Die Wärmebehandlung kann unter Umständen ein langwieriger und energieintensiver Prozess von mehreren Stunden sein, der am Ende in einer wiederum fehleranfälligen, sehr subjektiven Sichtprüfung endet. Dabei, und das gilt allgemein für die Sichtprüfung, entscheidet ein subjektiver

Eindruck über die Fehlerhaftigkeit des Werkstücks oder Prozessschritts. Also entstehen Kosten durch die Dauer und eine Unsicherheit durch die subjektive Entscheidung des Werkers.

Bei einer Behandlung mit Kontrastmitteln ist es ein ähnlicher Prozess, der Kosten durch die Einwirkungszeit, die Anschaffung der Mittel und Unsicherheiten durch die subjektive Entscheidung verursacht sowie zusätzlich Arbeitssicherheitsprobleme nach sich zieht. Im ungünstigsten Fall kann keines der oben genannten Probleme zur Erkennung verunreinigter oder falsch bearbeiteter Oberflächen genutzt werden, da die Wärmebehandlung keinen Kontrast an der Oberfläche ergibt, die Kontrastmittel nicht geeignet oder zulässig sind und die Person in der Sichtprüfung keine Fehler erkennt, weil z.B. im sichtbaren Teil des Lichts keine Information über das Problem steckt.

In der Offenlegungsschrift DE 10 2018 128 993 A1 wird das spektroskopische Messverfahren, insbesondere auch die Verwendung einer Hyperspektralkamera, beispielhaft beschrieben.

### ZUSAMMENFASSUNG DER ERFINDUNG

Es ist Aufgabe der Erfindung, eine Lösung anzugeben, durch die die Oberflächenbeschaffenheit eines Körpers einfach überprüft werden kann. Unter Körper kann beispielsweise ein Werkstück oder ein Bauteil verstanden werden. Es kann sich aber auch um einen menschlichen oder tierischen Körper oder auch Pflanzen handeln.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Ein erster Aspekt der Erfindung liegt in der Kombination von Material-, Bild-, Positions- und Objekterkennung mit einer Vorrichtung zur nichtinvasiven Bestimmung von fehlerhaften Kontrasten auf Körperoberflächen sowie deren Bereitstellung als Information für einen Benutzer.

In einem zweiten Aspekt erfolgt das der Vorrichtung zugrunde liegende Training eines statistischen Vorhersagemodells mittels multivariater Datenanalyse. Hierzu fließen Messdaten (Trainingsdaten) sowie Zielwerte (z.B. an Schliffen gemessene Schichtdicken) ein. Diese Informationen zum Training der Modelle ist internes Wissen. Ohne dieses ist ein solches Tool nicht zu erstellen.

In einem dritten Aspekt wird dem Benutzer in seinem Betrachtungsraum als Kontrastbild eine zusätzliche Information angezeigt, welche er mit bloßem Auge nicht erkennen kann. Durch den flexiblen Aufbau kann er schnell und effizient arbeiten.

Die genannten Aspekte können durch den Einsatz einer "erweiterten Augmented Reality (AR-)Brille" verwirklicht werden. Die Vorrichtung mit der AR-Brille wird vor Ort eingesetzt, um Oberflächen zu betrachten und fehlerhafte Bereiche der Oberfläche zu visualisieren. Fehlerhaft ist in diesem Kontext beispielsweise, falls eine Entschichtung nicht hinreichend gut bewerkstelligt wurde und eine Restschicht übrigblieb, oder eine Beschichtung nicht erfolgreich war (bzw. sein wird), weil eine Kontamination der Oberfläche vorliegt.

Die Vorrichtung "erweiterte AR-Brille" kann folgende Komponenten aufweisen:
- Eine spektroskopische Detektionseinheit, z.B. eine Hyperspectral Imaging (HSI) Kamera (= Hyperspektralkamera) mit einer geeigneten Beleuchtungseinheit,
- eine Recheneinheit zur Datenverarbeitung mittels multivariater Datenanalyse,
- eine Auswerteeinheit zur Erfassung von Gesten und Erkennung von Positionen und Orientierungen ("Posenerkennung") und
- eine darstellende Vorrichtung zu Visualisierung, z.B. eine AR-Brille, wie etwa die "Microsoft-Hololens". Dabei kann die AR-Brille von einem Benutzer eingesetzt werden, um in Echtzeit über einen eingeblendeten semitransparenten Kontrast die fehlerhaften Bereiche zu erkennen und zu bearbeiten.

Im Vergleich zu den bekannten Maßnahmen ist dieses hier vorgestellte Verfahren:
- kostengünstiger, da keine zusätzlichen Verbrauchsmaterialien angeschafft sowie zusätzliche Anlagen bereitgestellt werden müssen,
- objektiver, da die Datenanalyse immer Einschätzungen auf gleicher Basis und mit gleichen Algorithmen trifft
- zeitsparender, da eine Aufnahme und Analyse der Oberfläche weniger als eine Minute (bis hin zu live) dauern und sofort das Werkstück bearbeitet werden kann und dabei nur solche Bereiche, welche auch bearbeitet werden müssen, zeigt, und
- nichtinvasiv/nichtdestruktiv, wodurch keine zusätzliche Kontamination auftreten kann.

Die Erfindung beansprucht eine Vorrichtung zur spektroskopischen Oberflächenanalyse eines Körpers, mit folgenden Komponenten:
- eine AR-Brille,
- eine an der AR-Brille angeordnete spektroskopische Detektionseinheit,
- eine an der AR-Brille angeordnete Beleuchtungseinheit,
- eine an der AR-Brille angeordnete Posenerkennungseinheit und
- eine Rechen- und Auswerteinheit, die eingerichtet ist, ein durch die spektroskopische Detektionseinheit ermitteltes Kontrastbild eines betrachteten und mit der Beleuchtungseinheit beleuchteten Oberflächenbereichs des Körpers mit dem durch die AR-Brille betrachteten Oberflächenbereichs des Körpers mittels der Daten der Posenerkennungseinheit zu überlagern. Das heißt, das Kontrastbild wird mit der Realität gemappt, wobei die Posenerkennungseinheit die dafür notwendigen Positions- und Lageinformationen liefert.

Die Rechen- und Auswerteeinheit kann sich in der AR-Brille befinden oder auch abgesetzt, z.B. in einer Cloud, realisiert sein. Unter Körper wird insbesondere ein Werkstück, beispielweise eine Turbinenschaufel, oder ein Bauteil verstanden.

Unter erweiterter Realität (Englisch: augmented reality), kurz AR, wird die computergestützte Erweiterung der Realitätswahrnehmung verstanden. Diese Information kann alle menschlichen Sinnesmodalitäten ansprechen. Häufig wird jedoch unter erweiterter Realität nur die visuelle Darstellung von Informationen verstanden, also die Ergänzung von Bildern oder Videos mit computergenerierten Zusatzinformationen oder virtuellen Objekten mittels Einblendung bzw. Überlagerung.

Die Erfindung bietet den Vorteil, dass beispielsweise Oberflächen von Werkstücken oder Bauteilen bezüglich ihrer Beschaffenheit einfach, nutzerfreundlich und robust untersucht werden können.

In einer weiteren Ausgestaltung kann die Posenerkennungseinheit eingerichtet sein, mittels Sensoren die Position des Benutzers der Vorrichtung, seinen Blickwinkel auf die Oberfläche des Körpers und seinen Abstand zu dem Körper zu bestimmen.

In einer weiteren Ausgestaltung kann die Rechen- und Auswerteinheit eingerichtet sein, auf Basis von gespeicherten CAD Daten des Körpers oder Daten eines digitalen Zwillings des Körpers das Kontrastbild zu überlagern.

In einer weiteren Ausgestaltung kann die Rechen- und Auswerteinheit eingerichtet sein, aufgrund einer automatisierten Geometriemessung des Körpers mittels einer an der AR-Brille angeordneten Geometriemesseinheit das Kontrastbild zu überlagern.

Die Geometriemesseinheit hat einen oder mehrere Sensoren, z.B. auf Laserbasis, und kann auch Bestandteil der Posenerkennungseinheit sein.

In einer weiteren Ausprägung kann die Rechen- und Auswerteinheit eingerichtet sein, aus den abgetasteten spektralen Messdaten des Oberflächenbereichs durch prädiktive Modellierung und eine multivariate Datenanalyse die physikalischen und/oder chemischen Eigenschaften des Oberflächenbereichs zu ermitteln und in das Kontrastbild umzuwandeln.

Die prädiktive Analyse verwendet historische Daten, um zukünftige Ereignisse vorherzusagen. Im Allgemeinen werden historische Daten verwendet, um ein mathematisches Modell zu erstellen, das wichtige Trends erfasst. Dieses prädiktive Modell wird dann auf aktuelle Daten angewendet, um vorherzusagen, was als Nächstes passieren wird, oder um Aktionen vorzuschlagen, mit denen optimale Ergebnisse erreicht werden können.

Die prädiktive Modellierung verwendet bevorzugt eine multivariate Datenanalyse. Mit Hilfe von multivariaten Verfahren bzw. Analysemethoden werden mehrere Variablen gleichzeitig untersucht.

In einer Weiterbildung der Erfindung kann die spektroskopische Detektionseinheit eine Hyperspektralkamera aufweisen.

In einer Weiterbildung kann die Rechen- und Auswerteinheit eingerichtet sein, die Hyperspektralkamera über dem Oberflächenbereich zu fokussieren und die Aufnahmerichtung der Hyperspektralkamera senkrecht zu der Oberfläche des Körpers auszurichten.

Handelt es bei der Hyperspektralkamera um eine Zeilenkamera kann eine Scanbewegung mittels eines Gyro-Spiegels bzw. eines Laserkreisels unterstützt werden.

In einer weiteren Ausführung kann die Beleuchtungsvorrichtung eingerichtet sein, die Winkelstellung der Ausleuchtung des Oberflächenbereichs zu verändern.

Die Erfindung beansprucht auch ein automatisiertes (beispielsweise computerimplementiertes) Verfahren zur spektroskopischen Oberflächenanalyse eines Körpers, wobei:
ein durch eine spektroskopische Detektionseinheit ermitteltes Kontrastbild eines betrachteten und mit der Beleuchtungseinheit beleuchteten Oberflächenbereichs eines Körpers mit dem durch eine AR-Brille betrachteten Oberflächenbereichs des Körpers mittels der Daten einer Posenerkennungseinheit überlagert werden.

In einer Weiterbildung des Verfahrens kann durch die Posenerkennungseinheit die Position des Benutzers der AR-Brille, sein Blickwinkel auf die Oberfläche des Körpers und sein Abstand zu dem Körper bestimmt werden.

In einer weiteren Ausgestaltung des Verfahrens kann auf Basis von gespeicherten CAD Daten des Körpers oder Daten eines digitalen Zwillings des Körpers das Kontrastbild überlagert werden.

In einer weiteren Ausprägung der Erfindung kann aufgrund einer automatisierten Geometriemessung des Körpers mittels einer an der AR-Brille angeordneten Geometriemesseinheit das Kontrastbild überlagert werden.

In einer weiteren Ausgestaltung kann aus den abgetasteten spektralen Messdaten des Oberflächenbereichs durch prädiktive Modellierung und eine multivariate Datenanalyse die physikalischen und/oder chemischen Eigenschaften des Oberflächenbereichs ermittelt und in das Kontrastbild umgewandelt werden. Weitere Besonderheiten und Vorteile der Erfindung werden aus den nachfolgenden Erläuterungen eines Ausführungsbeispiels anhand von schematischen Zeichnungen ersichtlich.

### KURZE BESCHREIBUNG DER ZEICHNUNGEN

Es zeigen:
FIG. 1 ein Blockschaltbild einer Vorrichtung zur spektroskopischen Oberflächenanalyse und
FIG. 2 ein Ablaufdiagramm eines Verfahrens zur spektroskopischen Oberflächenanalyse.

### DETAILLIERTE BESCHREIBUNG DER ERFINDUNG

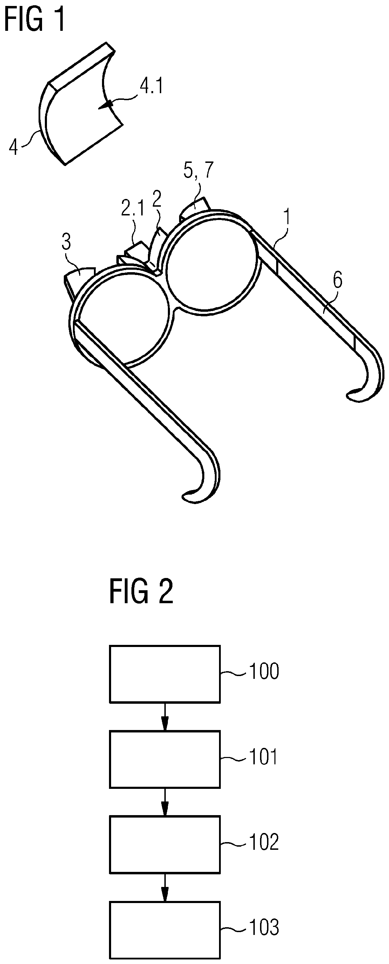

FIG. 1 zeigt ein Blockschaltbild einer Vorrichtung zur spektroskopischen Oberflächenanalyse eines Körpers 4. Die Vorrichtung umfasst eine AR-Brille 1, eine Beleuchtungseinheit 3, eine spektroskopische Detektionseinheit 2 und eine Posenerkennungseinheit 7. Zur Auswertung und Steuerung dient die Rechen- und Auswerteinheit 6. Diese kann in der AR-Brille oder in einer Cloud realisiert sein.

Bevorzugt enthält die Detektionseinheit 2 eine Hyperspektralkamera 2.1, mittels derer eine hyperspektrale Abtastung des von einem Nutzer mit der AR-Brille 1 betrachteten Oberflächenbereichs 4.1 des Körpers 4 erfolgt. Dieses dadurch ermittelte sogenannte "Kontrastbild" wird der Realität (= sichtbarer Oberflächenbereich 4.1) anhand von Daten der Posenerkennungseinheit 7 und anhand der Geometriedaten des Körpers 4 überlagert.

Durch die Beleuchtungseinheit 3 wird die Oberfläche des Körpers 4 großflächig mit Licht (UV, sichtbar oder infrarot, eine LED oder ein Laser) beleuchtet und die reflektierte Strahlung wird durch die Hyperspektralkamera 2.1 detektiert. Die Hyperspektralkamera 2.1 zeichnet für jeden aufgenommen Bildpunkt ein Spektrum auf. Jedes Spektrum beinhaltet Informationen über die Oberflächenbeschaffenheit- und -zusammensetzung, d.h. die molekularen Schwingungen des Materials an der Oberfläche.

Das Kontrastbild zeigt in anderen Worten "bildhaft" die spektroskopisch gewonnenen physikalischen und chemischen Eigenschaften des Oberflächenbereichs 4.1 zum Beispiel anhand von Farbvariationen oder Grauschattierungen.

Die Auswertung in der Rechen- und Auswerteeinheit 6 erfolgt mittels einer multivariaten Datenanalyse. Die Analyse der Spektren in Verbindung mit einer multivariaten Regression ergibt eine Einschätzung, welches Material wie dick oder in welcher Menge sich an der Oberfläche befindet. Da jeder Bildpunkt zu einer Einschätzung herangezogen wird, ergibt sich nach der Analyse das Kontrastbild, das für die Oberfläche Bereiche von verschiedenen Materialen bzw. Materialzusammensetzungen oder Schichtdicken von Materialien anzeigt.

Die Posenerkennungseinheit 7 weist eine Kombination von Sensoren auf und erlaubt, die Position des Benutzers, beispielsweise eines Facharbeiters, seinen Blickwinkel auf die Oberfläche des Körpers 4 und seinen Abstand zu der Oberfläche zu bestimmen. Da in vielen Fällen die Geometrie des Körpers 4, beispielsweise eines Werkstücks, bekannt ist (3D-CAD Design oder ein real 3D Scan des Werkstücks in einem vorhergehenden Analyseschritt mit Hilfe der Geometriemesseinheit 5), ist es möglich, das Kontrastbild auf die Geometrie des Körpers 4 zu mappen. Sensoren sind bevorzugt: 3D-Sensoren (ToF / structured light / stereo-vision, etc.), elektromagnetische Trackingsysteme (für Position und Orientierung im Raum) etc.

Die AR-Brille 1 zeigt somit das Kontrastbild in seiner korrekten Entzerrung als Overlay (und semi-transparent) der wirklichen Umgebung bzw. Oberfläche des Körpers 4 an, und unterstützt so eine Bearbeitung des Körpers 4. Hierdurch werden die oben beispielhaft angesprochenen Kontaminationen auf effiziente Weise und für den Benutzer möglichst schonend, d.h. keine mühsamen Objektplatzierungen in Messsystemen, sondern direkte Erkennung und Darstellung der bestimmten Kontraste, dargestellt.

FIG. 2 zeigt ein Ablaufdiagramm eines Verfahrens zur spektroskopischen Oberflächenanalyse eines Körpers 4 mit Hilfe einer Vorrichtung nach FIG. 1. Der Körper 4 ist beispielsweise ein Werkstück, dessen Oberfläche entschichtet wurde und von einem Werkstattmitarbeiter überprüft werden soll, ob die Entschichtung erfolgreich war.

In einem einleitenden vorangestellten Schritt 100 wird ein CAD-Datensatz des Körpers 4 bereitgestellt oder es erfolgt eine automatisierte Geometriemessung mit Hilfe der Vorrichtung.

In dem Schritt 103 wird ein in dem Schritt 101 durch eine spektroskopische Detektionseinheit 2 ermitteltes Kontrastbild eines betrachteten und mit der Beleuchtungseinheit 3 beleuchteten Oberflächenbereichs 4.1 des Körpers 4 mit dem durch die AR-Brille 1 der Vorrichtung betrachteten Oberflächenbereichs 4.1 des Körpers 4 mittels der Daten einer Posenerkennungseinheit 7 überlagert.

In dem Schritt 102 wird durch die Posenerkennungseinheit 7 die Position des Benutzers der AR-Brille 1, der Blickwinkel des Benutzers auf die Oberfläche des Körpers 4 und der Abstand des Benutzers zu dem Körper 4 bestimmt

Aus den abgetasteten spektralen Messdaten des Oberflächenbereichs 4.1 werden durch prädiktive Modellierung die physikalischen und/oder chemischen Eigenschaften des Oberflächenbereichs 4.1 ermittelt und in das Kontrastbild umgewandelt.

Eine weitere Möglichkeit zur Generierung von Materialkontrasten besteht darin, eine mit Filtern ausgebildete Multispektralkamera anstelle der Hyperspektralkamera zu verwenden. Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- 1: AR-Brille
- 2: Spektroskopische Detektionseinheit
- 2.1: Hyperspektralkamera
- 3: Beleuchtungseinheit
- 4: Körper
- 4.1: Oberflächenbereich des Körpers 4
- 5: Geometriemesseinheit
- 6: Rechen- und Auswerteeinheit
- 7: Posenerkennungseinheit
- 100: Geometriemessung
- 101: Spektroskopische Detektion
- 102: Posenerkennung
- 103: Überlagerung

## Patentansprüche

1. Vorrichtung zur spektroskopischen Oberflächenanalyse eines Körpers (4), aufweisend:
- eine AR-Brille (1),
- eine an der AR-Brille (1) angeordnete spektroskopische Detektionseinheit (2),
- eine an der AR-Brille (1) angeordnete Beleuchtungseinheit (3),
- eine an der AR-Brille (1) angeordnete Posenerkennungseinheit (7) und
- eine Rechen- und Auswerteinheit (6), die eingerichtet ist, ein durch die spektroskopische Detektionseinheit (2) ermitteltes Kontrastbild eines betrachteten und mit der Beleuchtungseinheit (3) beleuchteten Oberflächenbereichs (4.1) des Körpers (4) mit dem durch die AR-Brille (1) betrachteten Oberflächenbereichs (4.1) des Körpers (1) mittels der Messdaten der Posenerkennungseinheit (7) zu deckungsgenau überlagern.

2. Vorrichtung nach Anspruch 1,
**dadurch gekennzeichnet,**
**dass** die Posenerkennungseinheit (7) eingerichtet ist, mittels Sensoren die Position eines Benutzers der Vorrichtung, den Blickwinkel des Benutzers auf die Oberfläche des Körpers (4) und den Abstand des Benutzers zu dem Körper (4) zu bestimmen.

3. Anordnung nach Anspruch 1 oder 2,
**dadurch gekennzeichnet,**
**dass** die Rechen- und Auswerteinheit (6) eingerichtet ist, auf Basis von gespeicherten CAD Daten des Körpers (4) oder von Daten eines digitalen Zwillings des Körpers (4) das Kontrastbild deckungsgenau zu überlagern.

4. Anordnung nach Anspruch 1 oder 2,
**dadurch gekennzeichnet,**
**dass** die Rechen- und Auswerteinheit (6) eingerichtet ist, aufgrund einer automatisierten Geometriemessung des Körpers (4) mittels einer an der AR-Brille (1) angeordneten Geometriemesseinheit (5) das Kontrastbild deckungsgenau zu überlagern.

5. Anordnung nach einem der Ansprüche 1 bis 4,
**dadurch gekennzeichnet,**
**dass** die Rechen- und Auswerteinheit (6) eingerichtet ist, aus den abgetasteten spektralen Messdaten des Oberflächenbereichs (4.1) durch prädiktive Modellierung und eine multivariate Datenanalyse die physikalischen und/oder chemischen Eigenschaften des Oberflächenbereichs (4.1) zu ermitteln und in das Kontrastbild umzuwandeln.

6. Anordnung nach einem der vorhergehenden Ansprüche, **dadurch gekennzeichnet,**
**dass** die spektroskopische Detektionseinheit (2) eine Hyperspektralkamera (2.1) aufweist.

7. Anordnung nach Anspruch 6,
**dadurch gekennzeichnet,**
**dass** Rechen- und Auswerteinheit (6) eingerichtet ist, die Hyperspektralkamera (2.1) über dem Oberflächenbereich (4.1) zu fokussieren und die Aufnahmerichtung der Hyperspektralkamera (2.1) senkrecht zu der Oberfläche des Körpers (4) auszurichten.

8. Anordnung nach einem der vorhergehenden Ansprüche, **dadurch gekennzeichnet,**
**dass** die Beleuchtungseinheit (3) eingerichtet ist, die Winkelstellung der Ausleuchtung des Oberflächenbereichs (4.1) zu verändern.

9. Automatisiertes Verfahren zur spektroskopischen Oberflächenanalyse eines Körpers (4), wobei:
ein durch eine spektroskopische Detektionseinheit (2) ermitteltes Kontrastbild eines betrachteten und mit einer Beleuchtungseinheit (3) beleuchteten Oberflächenbereichs (4.1) eines Körpers (4) mit dem durch eine AR-Brille (1) betrachteten Oberflächenbereichs (4.1) mittels von Messdaten einer Posenerkennungseinheit (7) deckungsgenau überlagert werden.

10. Automatisiertes Verfahren nach Anspruch 9,
**dadurch gekennzeichnet,**
**dass** durch die Posenerkennungseinheit (7) die Position eines Benutzers der AR-Brille (1), sein Blickwinkel auf die Oberfläche des Körpers (4) und sein Abstand zu dem Körper (4) bestimmt wird.

11. Automatisiertes Verfahren nach Anspruch 9 oder 10, **dadurch gekennzeichnet,**
**dass** auf Basis von gespeicherten CAD Daten des Körpers (4) oder von Daten eines digitalen Zwillings des Körpers (4) das Kontrastbild deckungsgenau überlagert wird.

12. Automatisiertes Verfahren nach Anspruch 9 oder 10, **dadurch gekennzeichnet,**
**dass** aufgrund einer automatisierten Geometriemessung des Körpers (4) mittels einer an der AR-Brille (1) angeordneten Geometriemesseinheit (5) das Kontrastbild deckungsgenau überlagert wird.

13. Automatisiertes Verfahren nach einem der Ansprüche 9 bis 12,
**dadurch gekennzeichnet,**
**dass** aus den abgetasteten spektralen Messdaten des Oberflächenbereichs (4.1) durch prädiktive Modellierung und multivariate Datenanalyse die physikalischen und/oder chemischen Eigenschaften des Oberflächenbereichs (4.1) ermittelt und in das Kontrastbild umgewandelt werden.
